# EUROPEAN PATENT SPECIFICATION

(11) **EP 3 566 405 B1**
(45) Date of publication and mention of the grant of the patent: **17.08.2022**
(21) Application number: 17890074.2
(22) Date of filing: 23.10.2017
(51) Int. Cl.: H04L 27/26, H04B 7/0413, H04B 7/06, H04B 7/08

(54) **METHODS AND DEVICES FOR TRANSMITTING/RECEIVING INFORMATION RELATING TO SYNCHRONIZATION**
VERFAHREN UND VORRICHTUNGEN ZUM SENDEN7EMPFANGEN VON INFORMATIONEN IM ZUSAMMENHANG MIT SYNCHRONISIERUNG
PROCÉDÉS ET DISPOSITIFS D'ÉMISSION/RÉCEPTION D'INFORMATIONS RELATIVES À LA SYNCHRONISATION

(30) Priority: 05.01.2017 WO PCT/CN2017/070241
(43) Date of publication of application: 13.11.2019
(73) Proprietor: Telefonaktiebolaget LM Ericsson (PUBL), 164 83 Stockholm (SE)
(72) Inventor: LI, Shaohua, Beijing 100102 (CN); WANG, Jianfeng, Beijing 100102 (CN)
(74) Representative: Ericsson
(86) International application number: PCT/SE2017/051038
(87) International publication number: WO 2018/128566

(56) References cited:
- WO-A1-2017/022902
- US-A1- 2015 304 868
- US-A1- 2017 111 886
- ZTE ZTE MICROELECTRONICS: "Considerations on SS burst design", 3GPP DRAFT; R1-1611269, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051175250, Retrieved from the Internet: URL:http://www.3gpp.org/ftp/Meetings_3GPP_ SYNC/RAN1/Docs/ [retrieved on 2016-11-13]
- NOKIA ALCATEL-LUCENT SHANGHAI BELL: "NR-PBCH Design", 3GPP DRAFT; R1-1612807, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, U.S.A.; 20161114 - 20161118 13 November 2016 (2016-11-13), XP051176749, Retrieved from the Internet: URL:http://www.3gpp.org/ftp/Meetings_3GPP_ SYNC/RAN1/Docs/ [retrieved on 2016-11-13]
- SHARP: "DL synchronization signal structure in NR", 3GPP DRAFT; R1-1612621, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 4 November 2016 (2016-11-04), XP051189652, Retrieved from the Internet: URL:http://www.3gpp.org/ftp/tsg_ran/WG1_RL 1/TSGR1_87/Docs/ [retrieved on 2016-11-04]
- HUAWEI ET AL: "NR Primary and Secondary Synchronization Signals Design", 3GPP DRAFT; R1-1611261, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 5 November 2016 (2016-11-05), XP051189830, Retrieved from the Internet: URL:http://www.3gpp.org/ftp/tsg_ran/WG1_RL 1/TSGR1_87/Docs/ [retrieved on 2016-11-05]
- HUAWEI HISILICON: 'NR Primary and Secondary Synchronization Signals Design' 3GPP DRAFT; R1-1611261 13 November 2016, 650, ROUTE DES LUCIOLES ; F-06921 SOPHIA-ANTIPOLIS CEDEX ; FRANCE, XP051175242
- CATT: 'NR Initial Access Procedure with multi-stage synchronization signals' 3GPP DRAFT; R1-1611374 13 November 2016, 650, ROUTE DES LUCIOLES ; F-06921 SOPHIA-ANTIPOLIS CEDEX ; FRANCE, XP051175355

## Description

### TECHNICAL FIELD

The present disclosure relates to communication technology, and more particularly, to methods and devices for transmitting/receiving information relating to synchronization.

### BACKGROUND

In the current 3GPP RAN1 discussion on New Radio (NR), at least two types of synchronization signals have been defined for synchronization, including NR-Primary Synchronization Signal (NR-PSS, known simply as PSS hereinafter) at least for initial symbol boundary synchronization to the NR cell and NR-Secondary Synchronization Signal (NR-SSS, known simply as SSS hereinafter) for detection of NR cell IDentification (ID) or at least part of NR cell ID. The number of NR cell IDs is targeted to be at least 504. NR-SSS detection is based on the fixed time/frequency relationship with NR-PSS resource position irrespective of duplex mode and beam operation type at least within a given frequency range and CP overhead. NR has also defined at least one broadcast channel, i.e., NR- Physical Broadcast CHannel (NR-PBCH, known simply as PBCH hereinafter). NR-PBCH decoding is based on the fixed relationship with NR-PSS and/or NR-SSS resource position irrespective of duplex mode and beam operation type at least within a given frequency range and Cyclic Prefix (CP) overhead.

The following broadcasting schemes to carry essential system information may include, but not limited to:
□ Option 1: NR-PBCH carries a part of essential system information for initial access including information necessary for UE to receive channel carrying remaining essential system information;
□ Option 2: NR-PBCH carries minimum information necessary for UE to perform initial UL transmission (not limited to NR-PRACH) in addition to information in Option 1; and
□ Option 3: NR-PBCH carries all essential system information for initial access. For PSS/SSS/PBCH transmission, the 3GPP RAN1 group has agreed that PSS, SSS and/or PBCH can be transmitted within a 'Synchronization Signal (SS) block'. It should be noted that multiplexing other signals are not precluded within a 'SS block.'

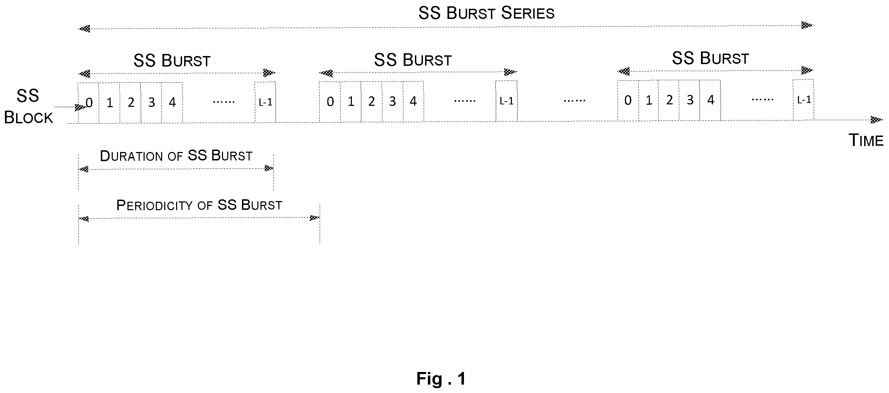

In the current 3GPP discussion, the basic structure for the synchronization signals and channels has been defined. Fig. 1 shows a schematic diagram of a basic structure for the synchronization signals transmission.

As shown in Fig. 1, one or more 'SS block(s)' compose an 'SS burst', and one or multiple 'SS burst(s)' compose a 'SS burst set'. The number of 'SS block(s)' composing one 'SS burst set' is L in this example, where L is a positive integer. The number of SS bursts within one SS burst set is finite.

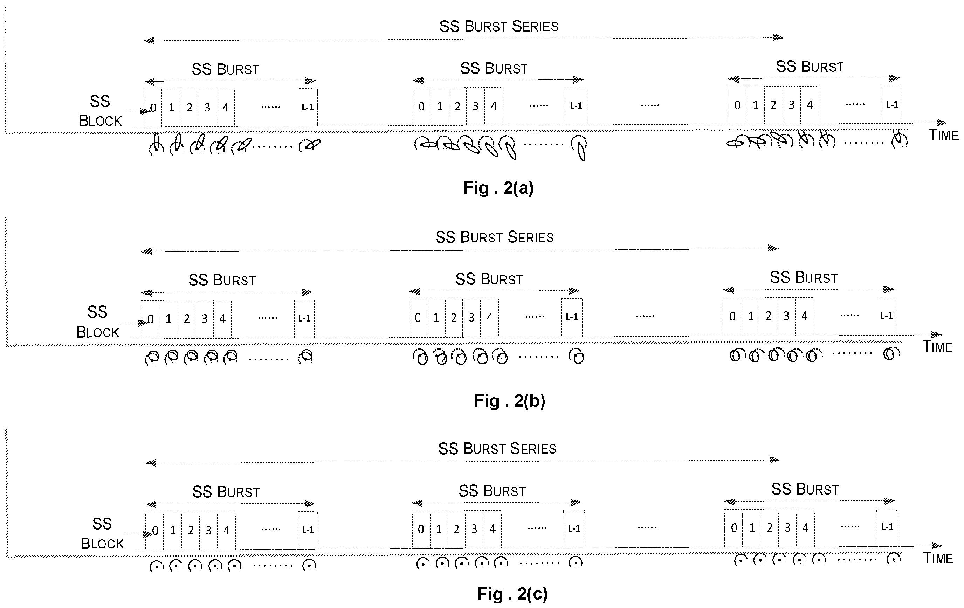

Figs. 2(a)-2(c) give some examples on how to combine beam with synchronization signals/channels, as described in Intel's contribution R1-1610522.

In Fig. 2 (a), multiple beams are applied per burst, and beams may be different in different signal bursts. In Fig. 2 (b), a single beam is applied for each burst, and different beams are applied for different bursts. In Fig. 2 (c), only one beam is used for all synchronization channels and signals across all synchronization signal bursts.

Although the basic structure for the synchronization signals and channels has been defined, some issues are still not resolved. One issue is about the number of supported beams. Based on current discussion, 128 or more antennas can be configured for high frequency, thus in principle 128 or more beams can be formed for high frequency. For lower frequency, few beams (i.e., 1 or 2 beams) are configured.

The second issue is whether the number of beams is transparent or not to UE. It is not clear in 3GPP group either. If the number of beams is transparent to UE, one method is to define the maximum number of beams that UE should monitor. UE should monitor the maximum number of beams in each SS burst. In this method, no matter how many beams are configured, UE should monitor all the potential beams. For a low frequency, when few beams are configured, much UE power is wasted due to monitoring beams that are not transmitted.

ZTE Microelectronics, 3GPP TSG RAN WG1, R1-1611269 further discusses how it may be useful for a UE to know in advance the repetition structure in the SS burst for a certain cell. Hence R1-1611269 suggests that connected mode UEs can be informed of the SS burst structure of a cell in the measurement configuration.

### SUMMARY

The invention is as defined in the independent claims. Further aspects are disclosed in the dependent claims.

### BRIEF DESCRIPTION OF THE DRAWINGS

The above and other objects, features and advantages will be more apparent from the following description of embodiments with reference to the figures, in which:
Fig. 1 shows a schematic diagram of a basic structure for the synchronization signals transmission;
Figs. 2(a)-2(c) give some examples on how to combine beam with synchronization signals/channels, as described in Intel's contribution R1-1610522;
Fig. 3 is a flowchart illustrating a method 300 for use in synchronization according to an embodiment of the present disclosure;
Figs. 4(a)-4(b) show schematic diagrams exemplifying the information indicating the number of transmitted beams according to an embodiment of the present disclosure;
Fig. 5 illustrates an example of transmitting the information across multiple SS blocks according to an embodiment of the present disclosure;
Fig. 6 is a flowchart illustrating a method 600 for use in synchronization according to an embodiment of the present disclosure;
Fig. 7 is an exemplary flowchart of a procedure 700 for performing synchronization based on the received information according to an embodiment of the present disclosure;
Fig. 8 is a block diagram of an access device according to an embodiment of the present disclosure;
Fig. 9 is a block diagram of an access device according to another embodiment of the present disclosure;
Fig. 10 is a block diagram of a terminal device according to an embodiment of the present disclosure; and
Fig. 11 is a block diagram of a terminal device according to another embodiment of the present disclosure.

### DETAILED DESCRIPTION

The embodiments of the disclosure will be detailed below with reference to the drawings. It should be appreciated that the following embodiments are illustrative only, rather than limiting the scope of the disclosure.

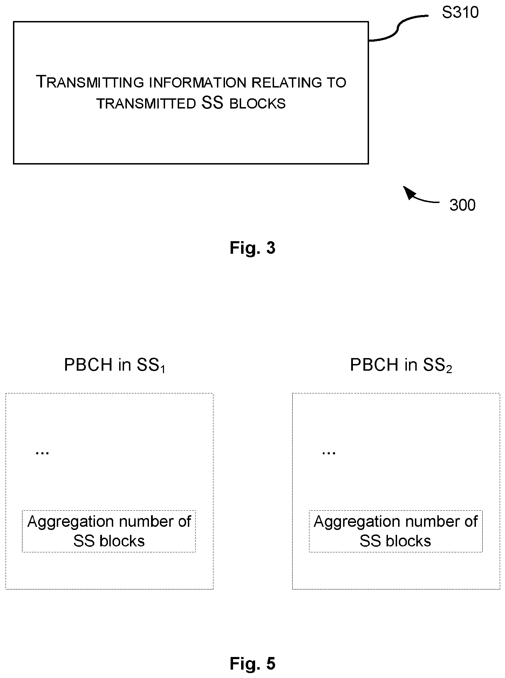

Fig. 3 is a flowchart illustrating a method 300 for use in synchronization according to an embodiment of the present disclosure. The method 300 can be performed at an access device, such as an evolved NodeB (eNB) or gNB or any kind of base station or access point used for radio communication with a terminal device.

At step S310, information relating to transmitted Synchronization Signal (SS) blocks is transmitted to a terminal device, such as a User Equipment (UE). The terminal device herein can be any type of wireless device capable of communicating with an access device or another terminal device over radio signals. The terminal device may also be a radio communication device, a target device, Narrow Band Internet of Things (NB-IoT) device, a Device-to-Device (D2D) UE, a machine type UE, or a UE capable of Machine-to-Machine (M2M) communication, a sensor equipped with a UE, an iPAD, a tablet, a mobile terminal, a smart phone, Laptop Embedded Equipped (LEE), Laptop Mounted Equipment (LME), Universal Serial Bus (USB) dongles, Customer Premises Equipment (CPE), etc.

According to the present disclosure, the information may be transmitted in various formats. This will be further explained with reference to the following implementations.

In an implementation, the information indicates a range for the number of transmitted beams. Each of the transmitted beams is associated with a transmitted SS block. One example is given in Table 1. It is assumed that 2 bits are used for the information. Under this assumption, "00" indicates that only one beam is configured for each SS burst (i.e., the number of beams is 1), "01" stands for the number of transmitted beams is in the range of 1 to 4, and so on. This implementation may reduce power used by the terminal device in monitoring beams that are not transmitted.

**Table 1: Information indicating the number of transmitted beams**

| Index | The number of transmitted beams |
|---|---|
| 00 | *t =* 1 |
| 01 | 1 < *t* ≤ 4 |
| 10 | 4 < *t* ≤ 8 |
| 11 | 8 < *t* ≤ 16 |

In another implementation, the information indicates range for each SS burst duration. Each SS burst includes one or more transmitted SS blocks. Such information may restrict the monitoring of the terminal device for the synchronization signals/channels within one or more specific time periods. One example is shown in Table 2. It is assumed that 2 bits are used for the information. Under this assumption, "00" stands for the maximum duration of the SS burst is 8 slots, "01" stands for the maximum duration of the SS burst is 16 slots, and so on.

**Table 2: Information indicating the maximum duration for each SS burst**

| Index | Maximum number of duration |
|---|---|
| 00 | 8 slots |
| 01 | 16 slots |
| 10 | 32 slots |
| 11 | 64 slots |

In a further implementation, the information may indicate the maximum time index of transmitted SS blocks in each SS burst or the maximum number for any other logic index to identify the transmitted SS blocks. Such information may restrict the monitoring of the terminal device for the synchronization signals/channels within one or more specific time periods.

In a yet another implementation, the information may indicate the repetition number for each transmitted SS block. It may also include the preceding disclosed information. One example is shown in Table 3. In this example, both the repetition number and the number of transmitted beams are included in the synchronization information.

**Table 3: The information indicating repetition and the number of transmitted beams**

| Index | Repetition (*r*) | The number of transmitted beams |
|---|---|---|
| 000 | 1 | *t* = 1 |
| 001 | 2 | *t* = 1 |
| 010 | 4 | *t* = 1 |
| 011 | 1 | 1 < *t* ≤ 4 |
| 100 | 2 | 1 < *t* ≤ 4 |
| 101 | 4 | 1 < *t* ≤ 4 |
| 110 | 1 | 4 < *t* ≤ 8 |
| 111 | 2 | 4 < *t* ≤ 8 |

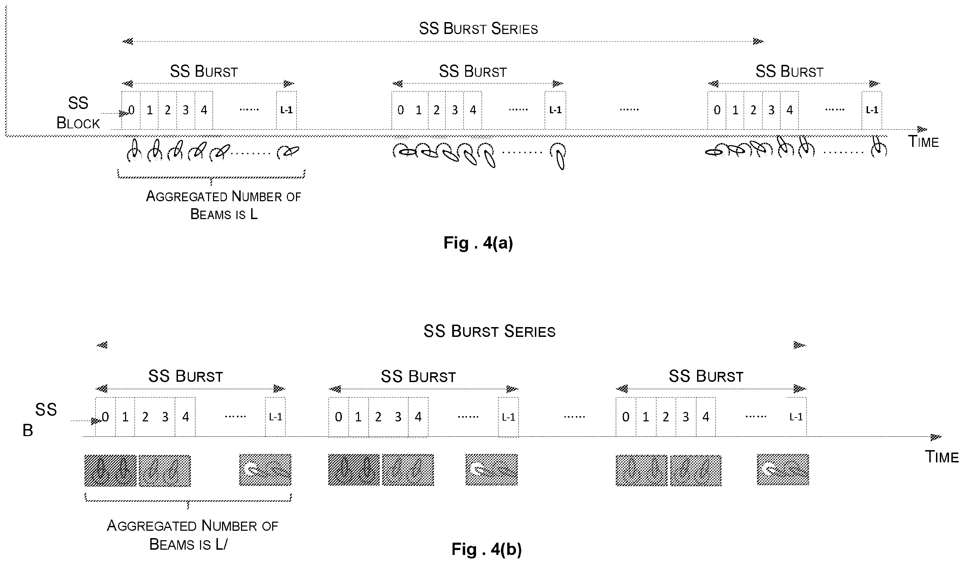

Figs. 4(a)-4(b) show schematic diagrams exemplifying the information indicating the number of transmitted beams according to an embodiment of the present disclosure.

It is assumed that L=8, i.e., there are eight 'SS' blocks within one SS burst. For Fig. 4(a) where the beam is not repetitive and the number of transmitted beams is in a range of 4<t≤8, "110" may be sent to the terminal device. For Fig. 4(b) where the beam is repeated twice in time domain and the number of transmitted beams is in a range of 1<t≤4, the number of transmitted beams is 4. Thus, "100" will be sent to the terminal device.

In some embodiment, step S310 may further include transmitting the information in PBCH. As another alternative, step S310 may further comprise transmitting the information in PSS and/or SSS. As another alternative, step S310 may further comprise transmitting a part of the preceding disclosed information in PSS and/or SSS, and transmitting a part of the information from PBCH. As another alternative, step S310 may further comprise transmitting the information by utilizing the numerology used for the PSS and/or SSS and/or PBCH. As another alternative, step S310 may further comprise transmitting the information via Radio Resource Control (RRC) signaling, and/or Media Access Control (MAC) Control Element (CE) and/or dynamic signaling. As a further alternative, the information may be predefined.

In case the information is in a predefined way, the maximum number of transmitted beams may be associated with the frequency range and/or numerology used in the current frequency. For example, for low frequency, few maximum beams are potentially configured and for higher frequency, more maximum beams are potentially configured.

In an embodiment, the information may be transmitted across multiple SS blocks. Fig. 5 illustrates an example of transmitting the information across multiple SS blocks according to an embodiment of the present disclosure. In this example, it is assumed that the information is transmitted in PBCH, which may be in both of SS block 1 and SS block 2. Assuming the aggregation number of SS blocks is informed, the information can be transmitted as illustrated in Fig. 5. In this example, the same information (a.k.a the aggregation number of SS blocks) is transmitted repeatedly in multiple SS blocks.

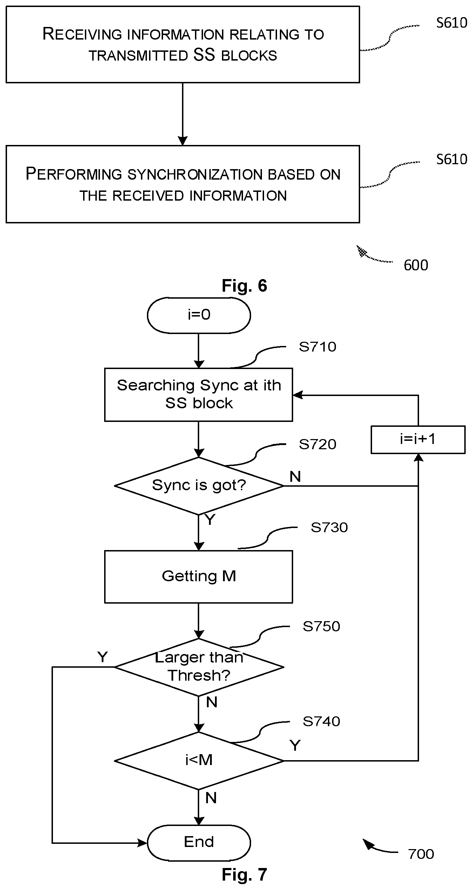

Fig. 6 is a flowchart illustrating a method 600 for use in synchronization according to an embodiment of the present disclosure. The method 600 can be performed at a terminal device, e.g., a UE.

At step S610, the terminal device receives information relating to transmitted Synchronization Signal (SS) blocks from an access device such as an eNB or gNB. The above examples on the information described in connection with Figs. 3-5 and Tables 1-3 also apply to this method.

In particular, the received information indicates a range for the number of transmitted beams as illustrated in Table 1, or a range for each SS burst duration as shown in Table 2, or the repetition number for each transmitted SS block as shown in Table 3. Furthermore, the synchronization information may also indicate the maximum time index of the transmitted SS blocks in each SS burst or the maximum number for any other logic index to identify the transmitted SS blocks. The terminal device can also receive the information transmitted as shown in Fig. 5. Each of the transmitted beams is associated with a transmitted SS block, and/or each SS burst includes one or more transmitted SS blocks.

At step S620, the terminal device performs synchronization based on the received information.

For example, in the step S620, the terminal device can monitor the SS blocks transmitted from the access device based on the received information. Alternatively or additionally, in the step S620, the terminal device can perform beam search based on the received information. As described above, each transmitted beam can be associated with one transmitted SS block. The terminal device can search the transmitted beams with the knowledge of the transmitted SS blocks and/or beams indicated in the received information.

Fig. 7 is an exemplary flowchart of a procedure 700 for performing synchronization based on the received information according to an embodiment of the present disclosure.

At step S710, the terminal device searches synchronization at the ith SS block. The step S710 may be started from i=0.

At step S720, the terminal device determines whether synchronization is got at the ith SS block or not.

If the terminal device fails to get synchronization at the ith SS block, the procedure 700 returns to step S710, where the terminal device will search synchronization at the i+1th SS block.

If the terminal device gets synchronization at the ith SS block, the procedure 700 proceeds with step S730, where the information relating to transmitted SS blocks is obtained. In this example, the information is exemplified as the aggregation number of transmitted beams (i.e., M, which is a positive integer).

At step S740, the UE will further search the synchronization signals until the aggregation number of transmitted beams is larger than M.

Optionally, the procedure 700 may further include step S750 between step S730 and S740. At step S750, the synchronization quality is evaluated. If the synchronization quality is larger than a predetermined threshold, the terminal device may stop further synchronization and the procedure 700 ends. If the synchronization quality is not smaller than or equal to the predetermined threshold, the procedure 700 will proceed with step S740.

When M transmitted beams have been searched (i.e., M potential synchronization signals/channels have been searched), some criteria will be used for selecting the identified beams. One exemplary criteria is based on measurements of these synchronization channels. In this example, the strongest beam may be selected as the final selected beam. The terminal device will perform the subsequent procedure for the network access, or use this beam as a reference for the power control parameters setup, hardware setup, such as Automatic Gain Control (AGC) adjustment.

Further, with the received information, the terminal device may just monitor the maximum number of beams (i.e., M beams in this example) in the subsequent beam tracking and synchronization tracking. Thereby, this can save much UE processing power for the synchronization. Alternatively or additionally, in the step S620, the terminal device can perform resource mapping alignment between the terminal device and the access device based on the received information.

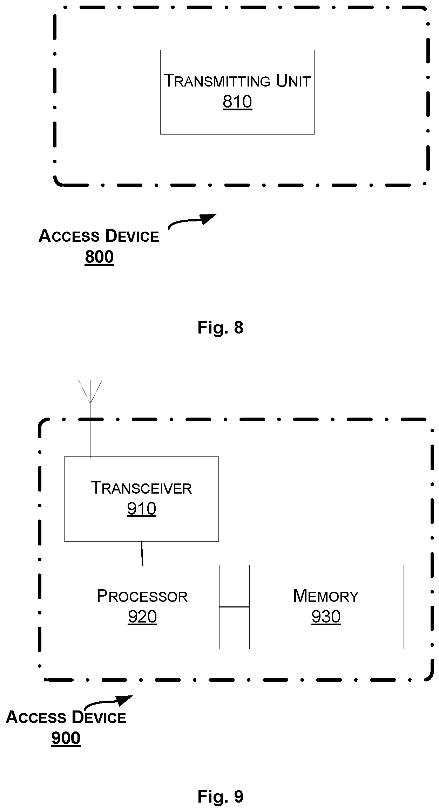

Correspondingly to the method 300 as described above, an access device is provided. Fig. 8 is a block diagram of an access device 800 for use in synchronization according to an embodiment of the present disclosure.

As shown in Fig. 8, the access device 800 includes a transmitting unit 810. The transmitting unit 810 is configured to transmit, to a terminal device, information relating to transmitted Synchronization Signal (SS) blocks.

In an example, the information indicates at least one of: the maximum number of transmitted beams or a range for the number of transmitted beams; the maximum duration for each SS burst or a range for each SS burst duration; the maximum time index of the transmitted SS blocks in each SS burst or the maximum number for any other logic index to identify the transmitted SS blocks; or the repetition number for each transmitted SS block.

In an example, each of the transmitted beams is associated with a transmitted SS block, and/or each SS burst includes one or more transmitted SS blocks.

The transmitting unit 810 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 3.

Fig. 9 is a block diagram of an access device 900 according to another embodiment of the present disclosure. The access device 900 can be provided for use in synchronization.

The access device 900 includes a transceiver 910, a processor 920 and a memory 930. The memory 930 contains instructions executable by the processor 920 whereby the access device 900 is operative to perform the actions, e.g., of the procedure described earlier in conjunction with Fig. 3. Particularly, the memory 930 contains instructions executable by the processor 920 whereby the access device 900 is operative to transmit, to a terminal device, information relating to transmitted Synchronization Signal (SS) blocks.

In an example, the information indicates at least one of: the maximum number of transmitted beams or a range for the number of transmitted beams; the maximum duration for each SS burst or a range for each SS burst duration; the maximum time index of the transmitted SS blocks in each SS burst or the maximum number for any other logic index to identify the transmitted SS blocks; or the repetition number for each transmitted SS block.

In an example, each of the transmitted beams is associated with a transmitted SS block, and/or each SS burst includes one or more transmitted SS blocks.

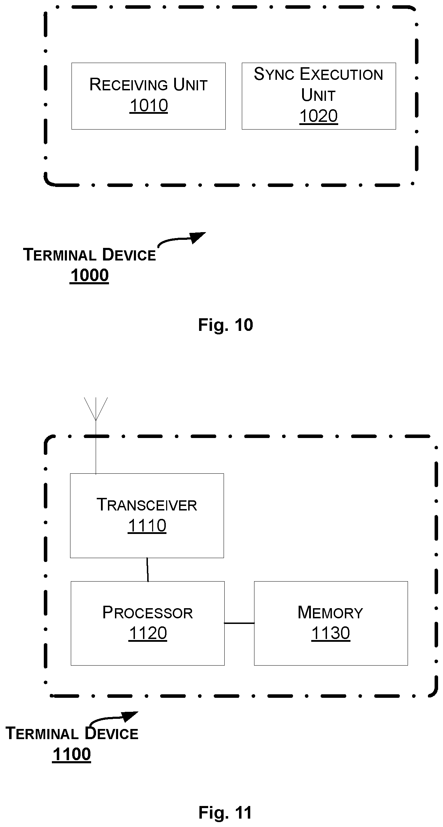

Correspondingly to the method 600 as described above, a terminal device is provided. Fig. 10 is a block diagram of a terminal device 1000 for use in synchronization according to an embodiment of the present disclosure.

As shown in Fig. 10, the terminal device 1000 includes a receiving unit 1010 and a synchronization execution unit 1020. The receiving unit 1010 is configured to receive, from an access device, information relating to transmitted Synchronization Signal (SS) blocks. The synchronization execution unit 1020 is configured to perform the synchronization based on the received information.

In an example, the information indicates at least one of: the maximum number of transmitted beams or a range for the number of transmitted beams; the maximum duration for each SS burst or a range for each SS burst duration; the maximum time index of the transmitted SS blocks in each SS burst or the maximum number for any other logic index to identify the transmitted SS blocks; or the repetition number for each transmitted SS block.

In an example, each of the transmitted beams is associated with a transmitted SS block, and/or each SS burst includes one or more transmitted SS blocks.

In an example, the operation of performing the synchronization comprises performing beam search, beam tracking and/or synchronization tracking based on the received information.

The receiving unit 1010 and the synchronization execution unit 1020 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 6.

Fig. 11 is a block diagram of a terminal device 1100 according to another embodiment of the present disclosure. The terminal device 1100 can be provided for use in synchronization.

The terminal device 1100 includes a transceiver 1110, a processor 1120 and a memory 1130. The memory 1130 contains instructions executable by the processor 1120 whereby the terminal device 1100 is operative to perform the actions, e.g., of the procedure described earlier in conjunction with Fig. 6. Particularly, the memory 1130 contains instructions executable by the processor 1120 whereby the terminal device 1100 is operative to receive, from an access device, information relating to transmitted Synchronization Signal (SS) blocks, and to perform the synchronization based on the received information.

In an example, the information indicates at least one of: the maximum number of transmitted beams or a range for the number of transmitted beams; the maximum duration for each SS burst or a range for each SS burst duration; the maximum time index of the transmitted SS blocks in each SS burst or the maximum number for any other logic index to identify the transmitted SS blocks; or the repetition number for each transmitted SS block.

In an example, each of the transmitted beams is associated with a transmitted SS block, and/or each SS burst includes one or more transmitted SS blocks.

In an example, the operation of performing the synchronization comprises performing beam search, beam tracking and/or synchronization tracking based on the received information.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 920 causes the access device 900 to perform the actions, e.g., of the procedure described earlier in conjunction with Fig. 3; or code/computer readable instructions, which when executed by the processor 1120 causes the terminal device 1100 to perform the actions, e.g., of the procedure described earlier in conjunction with Fig. 6.

The computer program product may be configured as a computer program code structured in computer program modules. The computer program modules could essentially perform the actions of the flow illustrated in Fig. 3 or 6.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories.

## Claims

1. A method (300) in an access device (900) for use in synchronization, comprising:
- transmitting (S310), to a terminal device (1100), information relating to transmitted Synchronization Signal, SS, blocks,
the method being **characterized in that** the information indicates at least one of:
- a range for the number of transmitted beams; or
- a range for each SS burst duration.

2. The method (300) according to claim 1, wherein each of the transmitted beams is associated with a transmitted SS block, and/or each SS burst includes one or more transmitted SS blocks.

3. An access device (900), comprising a transceiver (910), a processor (920) and a memory (930), the memory (930) comprising instructions executable by the processor (320) whereby the access device (900) is operative to perform the method according to any of claims 1-2.

4. A computer readable storage medium having computer program instructions stored thereon, the computer program instructions, when executed by a processor in an access device (900), causing the access device (900) to perform the method according to any of claims 1-2.

5. A method (600) in a terminal device (1100) for use in synchronization, comprising:
- receiving (S610), from an access device (900), information relating to transmitted Synchronization Signal, SS, blocks; and
- performing (S620) the synchronization based on the received information,
the method being **characterized in that** the information indicates at least one of:
- a range for the number of transmitted beams; or
- a range for each SS burst duration.

6. The method (600) according to claim 5, wherein each of the transmitted beams is associated with a transmitted SS block, and/or each SS burst includes one or more transmitted SS blocks.

7. The method (600) according to any of claims 5-6, wherein said performing (S620) the synchronization comprises performing beam search, beam tracking and/or synchronization tracking based on the received information.

8. A terminal device (1100), comprising a transceiver (1110), a processor (1120) and a memory (1130), the memory (1130) comprising instructions executable by the processor (1120) whereby the terminal device (1100) is operative to perform the method according to any of claims 5-7.

9. A computer readable storage medium having computer program instructions stored thereon, the computer program instructions, when executed by a processor in a terminal device (1100), causing the terminal device (1100) to perform the method according to any of claims 5-7.

## Patentansprüche

1. Verfahren (300) in einer Zugriffsvorrichtung (900) zur Verwendung bei einer Synchronisation, umfassend:
- Übertragen (S310), an ein Endgerät (1100), von Informationen bezüglich übertragener Synchronisationssignal(SS)-Blöcke,
wobei das Verfahren **dadurch gekennzeichnet ist, dass** die Informationen mindestens eines von Folgendem angeben:
- einen Bereich für die Anzahl übertragener Strahlen; oder
- einen Bereich für jede SS-Burst-Dauer.

2. Verfahren (300) nach Anspruch 1, wobei jeder der übertragenen Strahlen einem übertragenen SS-Block zugehörig ist und/oder jeder SS-Burst einen oder mehrere übertragene SS-Blöcke einschließt.

3. Zugriffsvorrichtung (900), umfassend einen Sendeempfänger (910), einen Prozessor (920) und einen Speicher (930), der Speicher (930) umfassend Anweisungen, die durch den Prozessor (320) ausführbar sind, wodurch die Zugriffsvorrichtung (900) betreibbar ist, um das Verfahren nach einem der Ansprüche 1 bis 2 durchzuführen.

4. Computerlesbares Speichermedium, das darauf gespeicherte Computerprogrammanweisungen aufweist, wobei die Computerprogrammanweisungen, wenn sie durch einen Prozessor in einer Zugriffsvorrichtung (900) ausgeführt werden, die Zugriffsvorrichtung (900) veranlassen, das Verfahren nach einem der Ansprüche 1 bis 2 durchzuführen.

5. Verfahren (600) in einem Endgerät (1100) zur Verwendung bei der Synchronisation, umfassend:
- Empfangen (S610), von einer Zugriffsvorrichtung (900), von Informationen bezüglich übertragener Synchronisationssignal(SS)-Blöcke; und
- Durchführen (S620) der Synchronisation basierend auf den empfangenen Informationen,
wobei das Verfahren **dadurch gekennzeichnet ist, dass** die Informationen mindestens eines von Folgendem angeben:
- einen Bereich für die Anzahl übertragener Strahlen; oder
- einen Bereich für jede SS-Burst-Dauer.

6. Verfahren (600) nach Anspruch 5, wobei jeder der übertragenen Strahlen einem übertragenen SS-Block zugehörig ist und/oder jeder SS-Burst einen oder mehrere übertragene SS-Blöcke einschließt.

7. Verfahren (600) nach einem der Ansprüche 5 bis 6, wobei das Durchführen (S620) der Synchronisation das Durchführen einer Strahlsuche, einer Strahlverfolgung und/oder einer Synchronisationsverfolgung basierend auf den empfangenen Informationen umfasst.

8. Endgerät (1100), umfassend einen Sendeempfänger (1110), einen Prozessor (1120) und einen Speicher (1130), der Speicher (1130) umfassend Anweisungen, die durch den Prozessor (1120) ausführbar sind, wodurch das Endgerät (1100) betreibbar ist, um das Verfahren nach einem der Ansprüche 5 bis 7 durchzuführen.

9. Computerlesbares Speichermedium, das darauf gespeicherte Computerprogrammanweisungen aufweist, wobei die Computerprogrammanweisungen, wenn sie durch einen Prozessor in einem Endgerät (1100) ausgeführt werden, das Endgerät (1100) veranlassen, das Verfahren nach einem der Ansprüche 5 bis 7 durchzuführen.

## Revendications

1. Procédé (300) dans un dispositif d'accès (900) à utiliser en synchronisation, comprenant :
- la transmission (S310), à un dispositif terminal (1100), des informations relatives aux blocs de signal de synchronisation, SS, transmis,
le procédé étant **caractérisé en ce que** les informations indiquent :
- une plage pour le nombre de faisceaux transmis ; et/ou
- une plage pour chaque durée de salve SS.

2. Procédé (300) selon la revendication 1, dans lequel chacun des faisceaux transmis est associé à un bloc SS transmis et/ou chaque salve SS comporte un ou plusieurs blocs SS transmis.

3. Dispositif d'accès (900), comprenant un émetteur-récepteur (910), un processeur (920) et une mémoire (930), la mémoire (930) comprenant des instructions exécutables par le processeur (320) grâce auxquelles le dispositif d'accès (900) fonctionne pour effectuer le procédé selon l'une quelconque des revendications 1 à 2.

4. Support de stockage lisible par ordinateur sur lequel sont stockées des instructions de programme informatique, les instructions de programme informatique, lorsqu'elles sont exécutées par un processeur dans un dispositif d'accès (900), amenant le dispositif d'accès (900) à effectuer le procédé selon l'une quelconque des revendications 1 à 2.

5. Procédé (600) dans un dispositif terminal (1100) à utiliser en synchronisation, comprenant :
- la réception (S610), à partir d'un dispositif d'accès (900), des informations relatives aux blocs de signal de synchronisation, SS, transmis ; et
- le fait d'effectuer (S620) la synchronisation sur la base des informations reçues,
le procédé étant **caractérisé en ce que** les informations indiquent :
- une plage pour le nombre de faisceaux transmis ; et/ou
- une plage pour chaque durée de salve SS.

6. Procédé (600) selon la revendication 5, dans lequel chacun des faisceaux transmis est associé à un bloc SS transmis et/ou chaque salve SS comporte un ou plusieurs blocs SS transmis.

7. Procédé (600) selon l'une quelconque des revendications 5 à 6, dans lequel ledit fait d'effectuer (S620) la synchronisation comprend le fait d'effectuer une recherche de faisceau, un suivi de faisceau et/ou un suivi de synchronisation sur la base des informations reçues.

8. Dispositif terminal (1100), comprenant un émetteur-récepteur (1110), un processeur (1120) et une mémoire (1130), la mémoire (1130) comprenant des instructions exécutables par le processeur (1120) grâce auxquelles le dispositif terminal (1100) fonctionne pour effectuer le procédé selon l'une quelconque des revendications 5 à 7.

9. Support de stockage lisible par ordinateur sur lequel sont stockées des instructions de programme informatique, les instructions de programme informatique, lorsqu'elles sont exécutées par un processeur dans un dispositif terminal (1100), amenant le dispositif terminal (1100) à effectuer le procédé selon l'une quelconque des revendications 5 à 7.
